# EUROPEAN PATENT APPLICATION

(11) **EP 2 348 724 A2**
(43) Date of publication of application: **27.07.2011**
(21) Application number: 11151080.6
(22) Date of filing: 17.01.2011
(51) Int. Cl.: H04N 7/16, H04N 7/173, H04N 5/445, H04N 21/472, H04N 21/482, H04N 21/422

(54) **Electronic program guide with video-on-demand functionality**

(30) Priority: 22.01.2010 EP 10151474
(71) Applicant: Kabel Deutschland GmbH, 85774 Unterföhring (DE)
(72) Inventor: Constant, Christian, 85774, Unterföhring (DE); Meßmer, Siegbert, 85774, Unterföhring (DE); James, Nicholas, 85774, Unterföhring (DE)
(74) Representative: Eisenführ, Speiser & Partner

(57) **Abstract**

A method of providing an electronic program guide in an apparatus for receiving and decoding digital television signals. The method comprises providing an electronic program guide screen having at least a first and a second window, wherein the first window displays a grid guide format of time and channel having a plurality of cells in which television program listings are displayed; providing input means for controlling a cursor to select between the first and the second window and to navigate and provide control functionality within each of the first and second window, wherein, if the first window is selected, the cursor selectively high-lights one of the television program listings displayed in the grid guide; wherein the second window displays Video-On-Demand program listings, wherein, if the second window is selected, the cursor selectively highlights one of the Video-On-Demand program listings and provides means for activating said Video-On-Demand program listing.

## Description

### TECHNICAL FIELD

The present invention relates generally to methods of providing an electronic program guide (EPG) in an apparatus for receiving and decoding digital television signals, wherein the method comprises providing an electronic program guide screen having at least a first and a second window, wherein the first window displays a grid guide format of time and channel having a plurality of cells in which television program listings are displayed; providing input means for controlling a cursor to select between the first and the second window and to navigate and provide control functionality within each of the first and second window, wherein, if the first window is selected, the cursor selectively highlights one of the television program listings displayed in the grid guide.

### BACKGROUND OF THE INVENTION

Electronic Program Guides (EPGs) are well known tools to ease viewer navigation in an electronic listing of broadcast programs. Particularly, Electronic Program Guides are used to provide an overview to scheduled broadcast television or radio programs. EPGs are typically displayed on a television screen. Additional functionality enables viewers to navigate, select, and discover content by time, title, channel, genre, etc. by use of a remote control, a keyboard, or other input devices such as a phone keypad. An EPG may also be employed to book content for future recording by a digital video recorder or personal video recorder. The on-screen information may be delivered by a dedicated channel or assembled by the receiving equipment from information sent by each program channel, the network operator or other data providers.

Electronic Program Guides are often run on an integrated receiver/decoder such as a set-top box (STB). An integrated receiver/decoder (IRD) is an electronic device used to pickup a radio-frequency signal and convert digital information transmitted in it. A Consumer IRD, commonly called a set-top box or set-top unit is a device that connects to a television and an external source of signal, turning the signal into content which is then displayed on the television screen.

Other environments to run an Electronic Program Guide may be Integrated Digital Televisions (IDTV). An IDTV set is a television set with a built in digital tuner, be it for DVB-T, DVB-T2,DVB-S, DVB-S2, DVB-C, DVB-C2, DMB-T/H, IP, ATSC or ISDB. Most of them also allow reception of analogue signals (PAL, SÉCAM or NTSC). They do away with the need for a STB for converting those signals for reception on a television. Some are integrated with a personal video recorder and / or a means to descramble encrypted programs or data streams (e.g. a Common Interface Plus module).

Systems which enable users to select and watch audio/video content on demand are generally referred to as Video-On-Demand (VOD) systems. VOD systems used in the context of a TV set either stream content through a STB, allowing viewing in real time, or download it to a device such as a computer, digital video recorder (or personal video recorder) or portable media player for viewing at any time. Most television providers offer both VOD streaming, such as pay-per-view, whereby a user buys or selects a movie or television program and it begins to play on the television set almost instantaneously, or downloading to a digital video recorder (DVR) rented from the provider, for viewing in the future. VOD contents can also be free of charge or subscription based.

US 7,188,356 B1 describes a program transmitting/receiving system having a center device and a terminal device connected through a communication device to the center device. The center device has a program information memory, a program information transmitter, a broadcasting device, and a request program transmitter. The terminal device has a program information receiver, a program receiver, an image information generator, a program request signal transmitter, and a request program receiver. The memory stores program information. The program information transmitter transmits the program information to the terminal device. The broadcasting device broadcasts the program to the terminal device in accordance with a schedule, and stores the program. The request program transmitter receives a request signal of the program from the terminal device, and transmits the program corresponding to the request signal to the terminal device. Then, the program information receiver receives the program information. The program receiver receives the program. The image information generator generates image information for a program selection of a user on the basis of the program information. The program request signal transmitter transmits the request signal of the program selected by the user to the center device, if the program selected in accordance with the image information is a past broadcast program. The request program receiver receives the program corresponding to the request signal.

WHO 20071091781 A1 describes an electronic programming guide (EPG) providing apparatus and method to collectively manage broadcast content using stored EPG information. The EPG providing apparatus includes a storing unit which stores broadcast content o and EPG information, an EPG screen configuring unit which configures an EPG screen including information on past, current, and future broadcast content using the EPG information, and a control unit which collectively manages broadcast content provided on the EPG screen based on a user input signal.

The Electronic Program Guides described above include past times on the time axis to offer so called catch-up events of past broadcast, wherein either the catch-up events are stored automatically on the set-top box such that the viewer can watch the requested programs some time after they have been broadcasted, or the catch-up events are provided by connecting to a Video-On-Demand catalogue of past broadcast programs offered by the provider. Thus, a disadvantage of these EPGs is that the Video-On-Demand contents are only displayed in the context of a strict time-ordering and in the context of the particular channel where they have been broadcasted.

US 5,751,282 A describes an interactive television system having a centrally located head end server coupled to service multiple, remotely located set-top boxes. Each set-top box runs an electronic programming guide that provides an on-screen program grid listing program titles in relation to their scheduled viewing times and channel numbers. The viewer is permitted to scroll through the program grid to list titles of past, current, and future programs. A database, resident at the head end server, supplies the program titles and scheduled viewing times of the past, current, and future programs to the electronic programming guide. The head end server transmits real-time video data streams of the available programs to the EPG. A continuous media server, resident at the head end server, stores the video data streams to build a reserve of previously played programs. The media server can also store video preview clips of future programs. When a viewer selects a current program, the real-time video data stream of the current program is displayed by the set-top box. When the viewer selects a past program, the head end server retrieves a stored video data stream of the selected past program and transmits it to the set-top box. When the viewer selects a future program, the head end server retrieves a stored video preview clip of the future program and transmits it to the set-top box.

It is an object of the present invention to provide an improved electronic program guide.

### SUMMARY OF THE INVENTION

The above object is achieved by a method of providing an electronic program guide in an apparatus for receiving and decoding digital television signals. The method comprises providing an electronic program guide screen having at least a first and a second window, wherein the first window displays a grid guide format of time and channel having a plurality of cells in which television program listings are displayed. The method further comprises providing input means for controlling a cursor to select between the first and the second window and to navigate and provide control functionality within each of the first and second window, wherein, if the first window is selected, the cursor selectively high-lights one of the television program listings displayed in the grid guide. According to the present invention, the second window displays Video-On-Demand program listings, wherein, if the second window is selected, the cursor selectively highlights one of the Video-On-Demand program listings and provides means for activating said Video-On-Demand program listing.

Further, the present invention relates to an apparatus for receiving and decoding digital television signals. The apparatus comprises an electronic program guide screen having at least a first and a second window, wherein the first window displays a grid guide format of time and channel having a plurality of cells in which television program listings are displayed. The apparatus further comprises input means for controlling a cursor to select between the first and the second window and to navigate and provide control functionality within each of the first and second window, wherein, if the first window is selected, the cursor selectively highlights one of the television program listings displayed in the grid guide. According to the present invention the second window displays a Video-On-Demand listing, wherein, if the second window is selected, the cursor selectively high-lights one of the Video-On-Demand program listings and provides means for activating said Video-On-Demand program listing.

Further, the present invention relates to one or more computer-readable media having computer readable instructions thereon which, when executed by one or more processors, cause the processors to implement the above-described method.

The Electronic Program Guide described herein is advantageous as it attracts the viewer's attention by providing an additional window for Video-On-Demand program listings which are highlighted in the EPG. As a consequence, the viewer is offered two information sources on the same screen, one referring to time-dependent broadcast content, one referring to time-independent VOD content. VOD contents may reflect the viewer's broadcast or genre preferences and are not limited to past broadcast programs.

In addition, said window has the advantage that contents shown therein are independent of the channel or time selected in the EPG grid window. A viewer is offered the functionality of at least two interactive windows with different contents: television program listings and Video-On-Demand listings.

### BRIEF DESCRIPTION OF THE DRAWINGS

In the following, preferred embodiments of the present invention shall be discussed with reference to the following figures:
Figure 1 a shows an electronic program guide screen according to a first embodiment of the present invention.
Figure 1b shows another mode of the electronic program guide screen according to the embodiment shown in Figure 1a.
Figure 2a shows an electronic program guide screen according to a second embodiment of the present invention.
Figure 2b shows another mode of the electronic program guide screen according to the embodiment shown in Figure 2a.
Figure 3a shows an electronic program guide screen according to the embodiment shown in Figures 1 a and 1 b with a further options window.
Figure 3b shows an electronic program guide screen according to the embodiment shown in Figures 2a and 2b with a further options window.
Figure 4 shows a remote control according to an embodiment of the present invention.

### DESCRIPTION OF PREFERRED EMBODIMENTS

According to the embodiments of the present invention described herein, Video-On-Demand content shall be listed and accessed from different Electronic Program Guide screens such as the "Electronic Program Guide listings grid" or the "TV viewing Now and Next banner" to be described herein below.

### Electronic Program Guide Listings Grid with Video-On-Demand

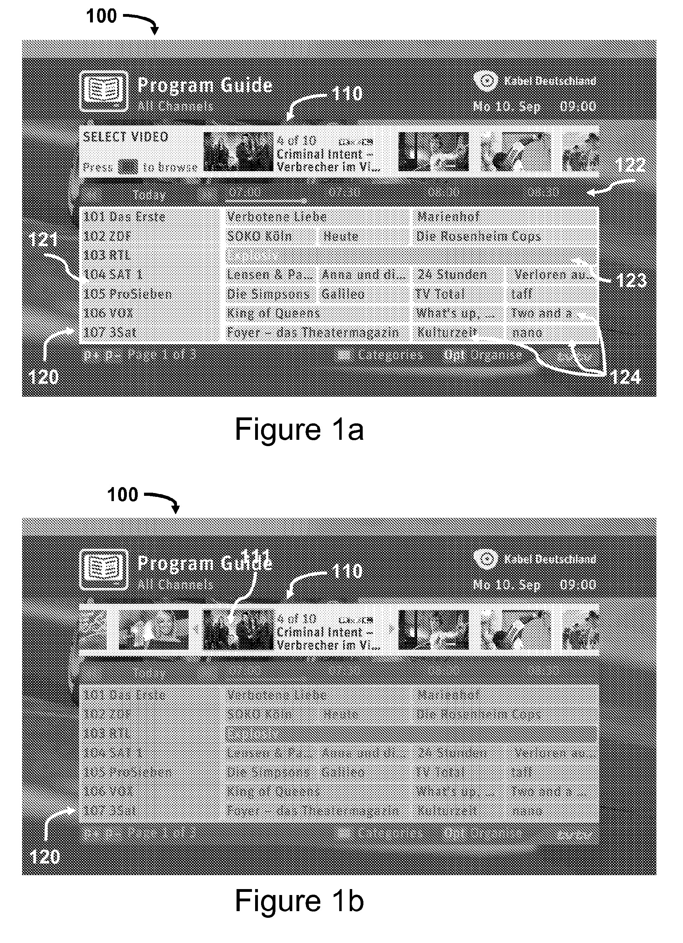

Figures 1a and 1b show a first embodiment of an electronic program guide screen 100 according to the invention. Electronic program guide screen 100 comprises a first window 120 displaying an Electronic Program Guide Listings Grid and a second window 110 displaying a mini showcase of Video-On-Demand content (to be described in more detail below). VOD content may comprise assets, bundles, trailers, tutorials, or other Web VOD services.

In the embodiment shown in Figures 1a and 1b, the Electronic Program Guide Listings Grid 120 is placed at the bottom of the screen and Video-On-Demand mini showcase 110 is displayed above.

By default, if the viewer is in a Video-On-Demand service area and has a working back channel then mini showcase 110 displaying Video-On-Demand content is shown within the Electronic Program Guide 100. The content is displayed both within the Electronic Program Guide Listings Grid screen 120 and TV Viewing Now and Next banner (to be described below). If the viewer is not in a Video-On-Demand service area or does not have a working back channel, then Video-On-Demand content is not displayed within the Electronic Program Guide 100.

In the embodiment shown in Figures 1a and 1b, Electronic Program Guide Listings Grid 120 comprises a horizontal time axis 122 and a vertical TV channel axis 121, although other orientations as well as other axis values are possible. In the embodiment shown in Figures 1 a and 1 b, time axis 122 displays a time period selected by the viewer. However, instead of a specific time interval, a viewer may also choose to only view certain times of certain days. For instance, if a viewer typically only watches TV in the evening, time axis 122 may show the preferred viewing times (e.g. between 8 pm and 10 pm) for today, tomorrow, the day after tomorrow, etc. in the embodiment shown in Figures 1a and 1b, TV channel axis 121 displays a subset of available TV channels. However, instead of showing a list of TV channels, axis 121 may also present a summary list of the viewer's preferred genre types, such as Musicals, Comedy, or Sports events, etc. In addition, other combinations of axis values rather than channel versus time are possible, such as channel versus genre. In the preferred embodiment, EPG listings grid 120 is further subdivided into program cells 124 which display the titles of TV programs corresponding to a time and channel specified by a viewer.

### Navigation

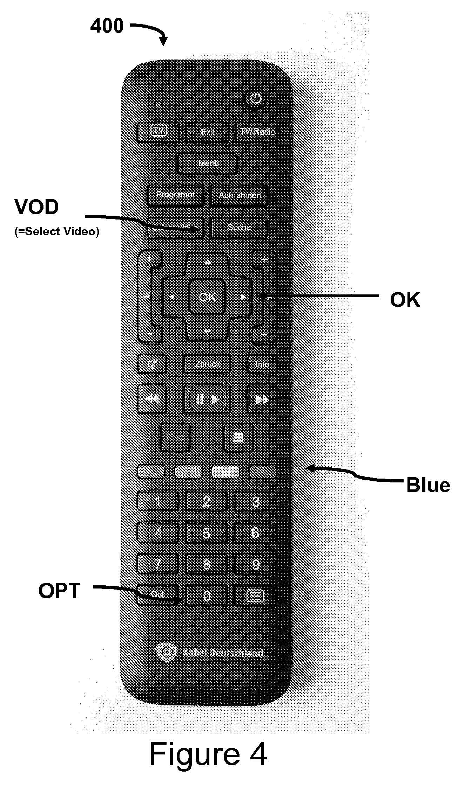

Typically, a viewer navigates within an Electronic Program Guide screen by making use of a remote control, a keyboard, or other input devices such as a phone keypad. For the purpose of this description, remote control shall refer to any input means for controlling a cursor to select portions of the Electronic Program Guide and navigate therein. A remote control 400 to control an Electronic Program Guide according to the embodiments described herein is shown in Figure 4 shall comprise at least the following keys:
- Up, Down, Left, Right
- oak button
- OPT button
- Blue button
- VOD button

The functionality of said keys in the context of the present invention is described below.

Moving the cursor between the program cells 124 (by means of the Up, Down, Left, and Right keys) highlights selected items 123. Pressing the OK button can then trigger a further activity, such as scheduling for recording (if the broadcast time is in the future), accessing additional information such as a synopsis, or switching to the according channel. In general, any action that can be performed within a commonly known EPG can be executed within the EPG Listings Grid as well.

By means of a remote control, a viewer may also navigate to window 110. If the viewer presses a specific key (e.g. the Blue button) on the remote control then the highlight moves into the mini showcase 110, as shown in Figure 1b. The viewer can then move the highlight back into the Electronic Program Guide Listings Grid 120 by pressing the Down arrow or by pressing the Blue button.

The items displayed in mini showcase 110 may or may not depend on the channel selected in the Electronic Program Guide Listings Grid 120. If the selected channel offers its own Video-On-Demand offerings, such as for example a Video-On-Demand Shop in Shop, then the promoted items in the mini showcase may be updated by showing the channel's Shop In Shop highlights. Otherwise the promoted items may depend on the category selected in the Electronic Program Guide Listings Grid 120; e.g. Movies, Music, Sports, etc. It is also possible that the promoted items are recommendations based on the viewer's preferences (see section "Recommendation engine" below). Thus, a viewer who likes to watch certain types of broadcast, e.g. Sports, Music, or Comedy, would get Video-On-Demand recommendations from a similar genre. In a similar manner, promoted items may be based on the preferences of other viewers, such as most popular shows, shows which are liked by viewers with comparable preferences etc.

If the Video-On-Demand button (currently named "Select Video") is pressed when the mini showcase 110 containing e.g. Video-On-Demand highlights is on-screen then the Video-On-Demand application opens and displays the respective showcase carousel where the previously highlighted item 111 in the Video-On-Demand application will be the same Video-On-Demand item highlighted in the Electronic Program Guide Listings Grid screen 120. Video and Audio of last viewed channel will continue in the background.

Default item 111 in the mini showcase will typically be selected randomly from the items displayed, and may differ each time the Electronic Program Guide Listings Grid 120 is entered. However, default item 111 may as well be correlated with the user's broadcast preferences or with the last show watched by the viewer, see below.

In a STB, the items in the mini showcase 110 must be cached so that there is no loss of performance because of fetching them as the viewer moves up and down from channel to channel in the Electronic Program Guide Listings Grid 120.

If the viewer presses and holds the Up or Down arrows on a remote control to navigate channels in the Electronic Program Guide Listings Grid 120, then the mini showcase 110 need only update when the key is released. If the viewer presses the OPT button on a remote control then a sub-menu is opened - see below.

If the viewer navigates from the mini showcase 110 (or any other area within the Electronic Program Guide 110) into the Video-On-Demand application, a Navigation Tracker described in more detail below may record the viewer's navigation behaviour.

### TV Viewing Now & Next Banner and Video-On-Demand

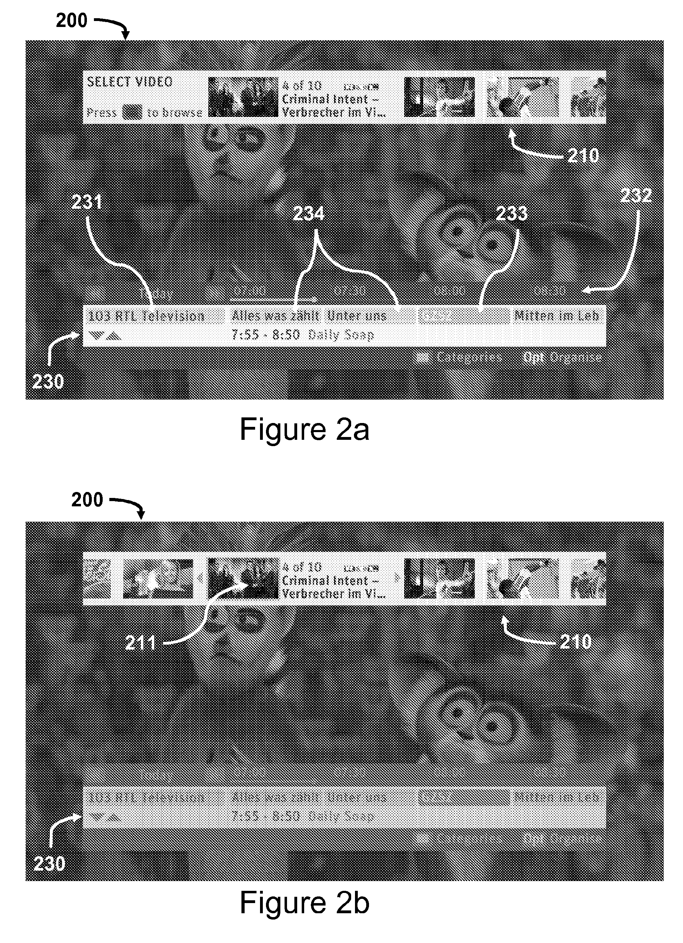

Figures 2a and 2b show a second embodiment of an electronic program guide screen 200 according to a further aspect of the present invention. Electronic program guide screen 200 comprises a first window 230 displaying a TV Viewing Now & Next banner and a second window 210 displaying a mini showcase of Video-On-Demand content. In the embodiment shown in Figure 2a and 2b, the TV Viewing Now & Next banner 230 is placed at the bottom of the screen and Video-On-Demand mini showcase 210 is displayed above.

By default, if the viewer is in a Video-On-Demand service area and has a working back channel then mini showcase 210 displaying Video-On-Demand content is shown within the Electronic Program Guide 200. If the viewer is not in a Video-On-Demand service area or does not have a working back channel then Video-On-Demand content is not displayed within the Electronic Program Guide 200.

In the embodiment shown in Figures 2a and 2b, TV Viewing Now & Next banner 230 comprises a horizontal time axis 232 and a vertical TV channel axis 231 with a single entry, although other orientations as well as other axis values are possible. In the embodiment shown in Figures 2a and 2b, time axis 232 displays a time period in accordance with the broadcast program shown at the presently viewed channel. In the embodiment shown in Figures 2a and 2b, TV channel axis 231 displays the current TV channel. In the preferred embodiment, TV Viewing Now & Next banner 230 is further subdivided into program cells 234 which display the titles of TV programs corresponding to the current time and channel.

The items displayed in mini showcase 210 may or may not depend on the selected channel. If the selected channel offers its own Video-On-Demand offerings, such as for example a Video-On-Demand Shop in Shop, then the promoted items in the mini showcase may be updated by showing the channel's Shop In Shop highlights. Otherwise the promoted items may depend on a viewer-selected category, e.g. Movies, Music, Sports, etc. It is also possible that the promoted items are recommendations based on the viewer's preferences. Thus, a viewer who likes to watch certain types of broadcast, e.g. Sports, Music, or Comedy, would get Video-On-Demand recommendations from a similar genre. In a similar manner, promoted items may be based on the preferences of other viewers, such as most popular shows, shows which are liked by viewers with or without comparable preferences etc.

Default item 211 in the mini showcase will typically be selected randomly from the items displayed, and may differ each time the TV Viewing Now & Next Banner 230 is invoked. However, default item 211 may as well be correlated with the user's broadcast preferences or with the last show watched by the viewer.

If the viewer presses and holds the Up or Down arrows on a remote control to navigate channels in the TV Viewing Now & Next Banner 230, then the mini showcase 210 need only update when the key is released. If the viewer presses the OPT button on a remote control then a sub-menu is opened - see below. If the viewer presses the Blue button on the remote control then the highlight moves into the mini showcase 210. The viewer can then move the highlight back into the TV Viewing Now & Next Banner 230 by pressing the Down arrow or by pressing the Blue button.

If the Video-On-Demand button (currently named "Select Video") is pressed when the mini showcase 210 containing e.g. Video-On-Demand highlights is on-screen then the Video-On-Demand application opens and displays respective showcase carousel where the previously highlighted item 211 in the Video-On-Demand application will be the same Video-On-Demand item highlighted in the TV Viewing Now & Next Banner 330. Video and Audio of last viewed channel will continue in the background.

If the viewer navigates from the mini showcase 310 (or any other area within the Electronic Program Guide 300) into the Video-On-Demand application, a Navigation Tracker described in more detail below may record the viewer's navigation behaviour.

Mini showcase 110 shall be described in the following in more detail with reference to Figures 1a a and 1 b

### Mini showcase

The mini showcase 110 displays multiple pictures of the Video-On-Demand items available in landscape format.

For one of the items (the default item for the highlight) 111 the information which is displayed may comprise the title (truncated by "..." to fit the space available), a Channel icon, an Item number (within items available in format "<x> of <n>", e.g. "4 of 10"; specific texts always depend on selected On Screen language), etc.

By using the Left and Right arrow keys the viewer can move the showcase right or left causing a different item to be highlighted. The showcase may be circular (i.e. when reaching the last item the first will be the next highlighted), but other listing are possible as well.

The VOD items can be assets, bundles, trailers, tutorial videos or hyperlinks to Web Video-On-Demand services.

By highlighting an item and pressing OK:
- If the item is an asset or a bundle the appropriate detailed description page within the Video-On-Demand application is opened. From here the normal Video-On-Demand operations (e.g. Watch / Rent) can be completed.
- If the item is a trailer then the (Video-On-Demand) trailer may be played directly. On completion of the trailer the appropriate detailed description page within the Video-On-Demand application is opened.
- If the item is a tutorial video then the video is played directly. On completion of the tutorial the Electronic Program Guide grid or TV Viewing Now and Next banner is displayed again with the highlight on the tutorial item.
- If the item is a link to a Web Video-On-Demand service then the appropriate web-page should be displayed.

### Option Sub-Menu

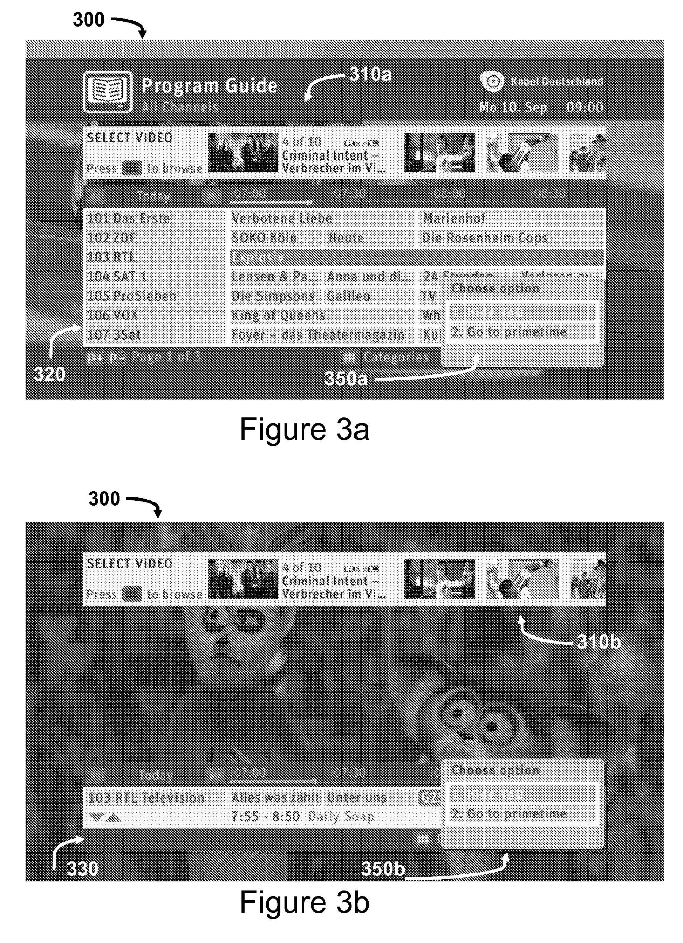

Figures 3a and 3b display further features of the preferred embodiment. Upon pressing the OPT key on a remote control, an additional window 350a, 350b is overland on the Electronic Program Guide Listings Grid 320 or on the TV Viewing Now & Next Banner 330. The sub-menu shown in Figures 3a and 3b contains two options:
- to navigate the Electronic Program Guide Listings Grid 320 or the TV Viewing Now & Next Banner 330 directly to primetime;
- if the viewer has a Video-On-Demand entitlement, is in a Video-On-Demand service area and has a working back channel, to hide ("Hide VOD") or show ("Show VOD") the Video-On-Demand content (whichever is not currently active).

Further options are possible and may also be defined by the viewer, e.g. navigating the Electronic Program Guide Listings Grid 320 or the TV Viewing Now & Next Banner 330 directly to the viewer's preferred broadcasting time (e.g. during his or her lunch break), or adding additional windows with an Electronic Program Guide Listings Grid, with an TV Viewing Now & Next Banner, or with a mini showcase.

If the viewer selects to hide the Video-On-Demand content then the mini showcase 310a, 310b displaying Video-On-Demand content is removed from the Electronic Program Guide screen 300, leaving only Electronic Program Guide Listings Grid 320 or TV Viewing Now and Next Banner 330.

On selecting "Show VOD", the mini showcase 310a, 310b displaying Video-On-Demand content is shown again as detailed in the sections above. The Hide / Show Video-On-Demand setting is persistent across Electronic Program Guide application sessions.

### User Navigation Tracking Tool

In a further aspect of the present invention, viewing behaviour when browsing between VOD content in the mini showcase and broadcast content in the EPG listings grid or in the TV Viewing Now & Next banner may be tracked and registered. Information on user interest and user navigation may then be used to further improve the suggested items.

In particular, changing between mini showcase and broadcasting grid (i.e. EPG listings grid or TV Viewing Now & Next banner) may be recorded together with further information such as date and time, the last viewed program, the times spent in particular subsections etc.

### Recommendations engine

In a still further embodiment of the present invention, VOD contents listed in the mini showcase may be recommendations in response to the viewing behaviour of a user or other users. Such a recommendations engine may be able to provide recommended VOD content tailored to the viewer's broadcast preferences (e.g. thriller or comedy, etc.), to the date and time (e.g. soccer on Saturday afternoons, soap operas on late weekday afternoons, etc.), to the viewer location (e.g. local area weather or traffic reports) or to suggestions by viewers with similar preferences.

In particular, the VOD contents shown in the mini showcase may vary depending on the highlighted item in the EPG listings grid or in the TV Viewing Now & Next Banner. Likewise, the VOD contents listed in the mini showcase may be selected in response to the list of channels displayed on TV channel axis 121 or to the date and time selected on horizontal time axis 122.

## Claims

1. A method of providing an electronic program guide in an apparatus for receiving and decoding digital television signals, the method comprising the steps of:
providing an electronic program guide screen having at least a first and a second window,
wherein the first window displays a grid guide format of time and channel having a plurality of cells in which television program listings are displayed;
providing input means for controlling a cursor to select between the first and the second window and to navigate and provide control functionality within each of the first and second window,
wherein, if the first window is selected, the cursor selectively highlights one of the television program listings displayed in the grid guide;
**characterized in that**
the second window displays video-on-demand program listings,
wherein, if the second window is selected, the cursor selectively highlights one of the video-on-demand program listings and provides means for activating said video-on-demand program listing.

2. The method according to claim 1 wherein the grid guide displays only one channel.

3. The method according to claims 1 or 2, wherein the apparatus for receiving and decoding digital television signals is a Digital Receiver in particular a Set-Top-Box or an integrated Digital TV.

4. The method according to one of the preceding claims, wherein the input means are capable of controlling a selective hiding of the second window.

5. The method according to one of the preceding claims, wherein the input means is a remote control device.

6. The method according to one of the preceding claims, wherein the video-on-demand program listings are selected from a list of recommended video-on-demand program listings, wherein the list of recommended video-on-demand program listings reflects a viewer's preferences.

7. The method according to one of the preceding claims wherein the second window is only displayed if a video-on-demand service is available.

8. An apparatus for receiving and decoding digital television signals, the apparatus comprising:
an electronic program guide screen having at least a first and a second window,
wherein the first window displays a grid guide format of time and channel having a plurality of cells in which television program listings are displayed;
input means for controlling a cursor to select between the first and the second window and to navigate and provide control functionality within each of the first and second window,
wherein, if the first window is selected, the cursor selectively highlights one of the television program listings displayed in the grid guide;
**characterized in that**
the second window displays a video-on-demand listing,
wherein, if the second window is selected, the cursor selectively highlights one of the video-on-demand program listings means for activating said video-on-demand program listing.

9. The apparatus according to claim 8 wherein the grid guide displays only one channel.

10. The apparatus according to claims 8 or 9, wherein the apparatus is a Digital Receiver in particular a Set-Top-Box or an integrated Digital TV.

11. The apparatus according to one of claims 8-10, further comprising input means for selectively hiding the second window.

12. The apparatus according to one of claims 8-11, wherein the input means is a remote control device.

13. The apparatus according to one of claims 8-12, wherein the video-on-demand program listings are selected from a list of recommended video-on-demand program listings, wherein the list of recommended video-on-demand program listings reflects a viewer's preferences.

14. The apparatus according to one of claims 8-13 wherein the second window is only displayed if a video-on-demand service is available.

15. One or more computer-readable media having computer readable instructions thereon which, when executed by one or more processors, cause the processors to implement the method according to one of claims 1-7.

16. One or more input means suitable to control the input means of the apparatus according to one of claims 8-14.
